# EUROPEAN PATENT SPECIFICATION

(11) **EP 3 492 654 B1**
(45) Date of publication and mention of the grant of the patent: **15.10.2025**
(21) Application number: 17833980.0
(22) Date of filing: 05.07.2017
(51) Int. Cl.: C08L 95/00, C08L 91/00, C08K 3/00, C08K 5/09, E01C 7/26

(54) **ASPHALT MIXTURE, METHOD FOR PRODUCING SAME AND PAVING METHOD USING SAME**
ASPHALTGEMISCH, VERFAHREN ZUR HERSTELLUNG DAVON UND ASPHALTIERUNGSVERFAHREN DAMIT
MÉLANGE D'ASPHALTE, SON PROCÉDÉ DE PRODUCTION ET PROCÉDÉ DE PAVAGE L'UTILISANT

(30) Priority: 29.07.2016 JP 2016149810
(43) Date of publication of application: 05.06.2019
(73) Proprietor: Maeda Road Construction Co., Ltd, Tokyo 141-8665 (JP)
(72) Inventor: MORIYASU, Hirochika, Tokyo 141-8665 (JP); KOSHI, Kentaro, Tokyo 141-8665 (JP); HATAKEYAMA, Keigo, Tokyo 141-8665 (JP)
(74) Representative: Kraus & Lederer PartGmbB
(86) International application number: PCT/JP2017/024666
(87) International publication number: WO 2018/020971

(56) References cited:
- WO-A1-2011/086722
- WO-A1-2015/107762
- CN-B- 103 602 087
- JP-A- 2002 332 606
- JP-A- 2005 528 460
- JP-A- 2009 221 436
- JP-A- 2015 050 943
- JP-A- 2016 124 982
- JP-A- H10 310 761
- JP-B1- 5 939 722
- JP-B2- 5 583 978
- US-A- 1 674 523
- US-A- 1 969 904
- US-A1- 2007 148 356

## Description

### TECHNICAL FIELD

The present invention relates to an asphalt mixture for use in road paving and the like and a process for production of the same, and also relates to a paving method using the same.

### BACKGROUND ART

Hot asphalt mixtures are usually used at an initial compaction temperature within the range of 110 to 140°C, such as provided by Paving Handbook ("Hosou Sekou Binran" in Japanese), for example. However, even though the hot asphalt mixtures can result in large strength immediately after paving, the mixtures can be used only until they cool. Therefore, the application of such a hot asphalt mixture may be difficult under various conditions, such as when small portions of the mixture are sequentially used, when the mixture is transported for a long period of time, and when a method such as a thin layer overlay method is used in which the mixture is spread into a layer with a small paving thickness, so that the temperature of the mixture significantly decreases immediately.

Accordingly, hot asphalt mixtures prepared using a warm-mix technique and ambient temperature paving-type asphalt mixtures are examined. The hot asphalt mixtures prepared using a warm-mix technique, i.e., warm-mix asphalt mixtures, are generally said to be able to lower the lower limit of the service temperature range of the hot asphalt mixtures by about 30°C. The ambient temperature paving-type asphalt mixtures are said to allow for paving at ambient temperature (100°C or lower).

As an asphalt mixture that allows for paving at ambient temperature or temperatures within a moderate temperature range, for example, a so-called cutback asphalt mixture is proposed in which the viscosity of the asphalt mixture is forcibly reduced using a mineral oil or the like. In the cutback asphalt mixture, as disclosed in JPH11-12475A, the asphalt is softened using a cutback material such as a mineral oil, and the asphalt mixture develops strength as the cutback material volatilizes. However, according to the method in which, as described above, the asphalt is "cut back" using a mineral oil or the like to forcibly reduce the viscosity for paving, there are drawbacks in that, for example, the mixture may exhibit considerably reduced strength on a newly opened road, and may require long-term curing.

An ambient temperature paving-type asphalt mixture using an asphalt emulsion is also proposed. Unfortunately, the mixture has relatively low strength even though the aggregate is not required to be heated and dried, and the range of its use may be limited in some cases because the decomposition rate of the asphalt emulsion should be taken into consideration. In addition, in the ambient temperature asphalt mixture using an asphalt emulsion, the asphalt emulsion may possibly flow out if it rains before the emulsion decomposes after paving.

In contrast, JP Patent No. 5583978B discloses an ambient temperature paving-type asphalt mixture that allows for paving at ambient temperature. This asphalt mixture uses a tall oil fatty acid as a cutback material (see, for example, "Matsu no Kagaku" (translated into Japanese from "Naval Stores -Production- -Chemistry- - Utilization-"), Volume 1, line 10 of page 474 to line 9 of page 475 (published by Harima Chemicals Group, Inc., June 1993)). The tall oil fatty acid acts to reduce the viscosity of the asphalt mixture, thereby allowing for paving at ambient temperature. According to this technique of JP Patent No. 5583978B, the tall oil fatty acid as a cutback material reacts with the cement after paving to act as a curing agent, thereby providing sufficient strength. Among further prior art, CN 103602087 B discloses an iron-bonded road asphalt and a preparation method thereof.

Such asphalt mixtures that allow for paving at ambient temperature or temperatures within a moderate temperature range have also been required to provide a paved body having improved characteristics, such as further enhanced strength, durability, and flexibility. Therefore, an asphalt mixture has been desired which has these improved characteristics and which allows for paving at ambient temperature or temperatures within a moderate temperature range.

### SUMMARY OF THE INVENTION

### PROBLEM TO BE SOLVED BY THE INVENTION

The present invention has been proposed in view of the above description, and an object of the present invention is to provide an asphalt mixture that can develop strength within a relatively short time after paving and can provide a paved body having enhanced strength and excellent rut resistance and flexibility.

### MEANS FOR SOLVING THE PROBLEMS

As a result of intensive studies to solve the above problems, the present inventors have found that: in the process of producing an asphalt mixture, a lubricative solidification material that contains a C6-C30 saturated fatty acid in an amount of 50 to 100 wt% and an alkaline additive material are added to and mixed with an aggregate and an asphalt to decrease the viscosity of the asphalt, thereby allowing for paving at temperatures within an ambient to moderate temperature range (e.g. 25 to 140°C, preferably 40 to 130°C); and a hardening accelerator is placed into the mixture at the time of paving to cause a saponification reaction or a neutralization reaction between the added lubricative solidification material and an alkaline component, and the reaction provides an asphalt mixture which has increased viscosity and can develop strength within a relatively short time. The present invention has thus been accomplished.

In particular, the present inventors have found that the use of said lubricative solidification material allows for paving at an ambient temperature or temperatures within a moderate temperature range and results in a paved body that has enhanced strength and is excellent in rut resistance and flexibility. The present invention has thus been accomplished.

That is, according to an aspect of the present invention, there is provided an asphalt mixture according to claim 1.

According to another aspect of the present invention, there is provided a paving method comprising: applying the above asphalt mixture in paving, adding a hardening accelerator to the asphalt mixture which is applied to cause a saponification reaction or a neutralization reaction between the lubricative solidification material and the alkaline additive material, thereby providing enhanced strength.

According to a further aspect of the present invention, there is provided a process for production of the above asphalt mixture, the process comprising: a first step of mixing an aggregate heated to 100 to 170°C and an asphalt heated to 130 to 170°C using a mixing apparatus; a second step of adding and mixing the lubricative solidification material to and with the mixture obtained in the first step; and a third step of adding and mixing the alkaline additive material to and with the mixture obtained in the second step.

### EFFECTS OF THE INVENTION

According to the present invention, the lubricative solidification material having low viscosity is added thereby to allow for paving at temperatures within an ambient to moderate temperature range (e.g., 25 to 140°C, preferably 40 to 130°C), and the hardening accelerator is added at the time of paving to cause ionic dissociation of the alkaline additive material in the mixture and thereby cause a saponification reaction or a neutralization reaction with the lubricative solidification material. This results in high strength at an early stage.

Moreover, according to the present invention, the lubricative solidification material that contains a C6-C30 saturated fatty acid in an amount of 50 to 100 wt% is used. Such a material allows for paving at ambient temperature or temperatures within a moderate temperature range, and can provide a paved body which has enhanced strength and is excellent in rut resistance and flexibility.

### DESCRIPTION OF EMBODIMENTS

The asphalt mixture according to the present invention comprises an aggregate, an asphalt, a lubricative solidification material, and an alkaline additive material mixed together, and is characterized i.a. in that the lubricative solidification material contains a C6-C30 saturated fatty acid in an amount of 90 to 100 wt%. The asphalt mixture according to the present invention is designed such that a hardening accelerator is added to the mixture at the time of paving to cause a saponification reaction or a neutralization reaction of the lubricative solidification material with an alkaline component that is originated from the alkaline additive material, thereby providing enhanced strength. In the present invention, water or the like may be used as the hardening accelerator.

The saponification reaction or neutralization reaction in the present invention may be any reaction as long as it generates a fatty acid alkaline salt. Examples of methods for the reaction include a saponification method in which an alkaline water is added to a fatty acid ester to generate a fatty acid alkaline salt (soap) and glycerin, and a neutralization method in which a higher fatty acid is neutralized by an alkaline water.

In the saponification reaction, if the alkaline additive material is added in a solid form without any solvent such as water, the reaction does not start in general. On the other hand, the presence of a solvent such as water causes a reaction (saponification reaction or neutralization reaction) of "(fatty acid and resin acid in lubricative solidification material) + (alkaline additive material) + (water) = (soap (solid))" to generate a soap. This provides strength.

The asphalt mixture according to the present invention contains an asphalt, an aggregate, a lubricative solidification material, and an alkaline additive material. The microstructure of the asphalt mixture is considered as follows: a lubrication layer made of the lubricative solidification material having low viscosity and the alkaline additive material is present between aggregates with an asphalt coating formed thereon, thereby providing a lubrication effect. Due to this effect, a paved body can remain in a low viscosity state until the saponification reaction or neutralization reaction. In other words, in the present invention, the lubricative solidification material acts, before paving, as a cutback material that reduces the viscosity of the asphalt mixture at temperatures within an ambient to moderate temperature region (e.g. 25 to 140°C, preferably 40 to 130°C).

After such an asphalt mixture according to the present invention is applied in paving, the hardening accelerator (e.g. water) is sprayed thereon, and compaction is performed using a roller. Otherwise, after compaction using a roller, the hardening accelerator (e.g. water) is sprayed. As a result, in the presence of the hardening accelerator (e.g., water), a saponification reaction or a neutralization reaction occurs between the lubricative solidification material and alkaline additive material contained in the asphalt mixture, and solidifies the asphalt mixture, thereby providing enhanced strength. The method of compaction for paving using the asphalt mixture according to the present invention is not limited to a method using roller compaction and may be appropriately selected in accordance with the purpose of paving. A method using beating may also be employed, for example, depending on the purpose of paving.

Each material that constitutes the asphalt mixture according to the present invention will then be described. The asphalt mixture according to the present invention contains an aggregate, an asphalt, a lubricative solidification material, and an alkaline additive material.

The aggregate is not particularly limited, and those used for typical asphalt for paving, such as crushed stone, sand, and stone powder, may be appropriately used. An aggregate of any granularity range, such as dense-grade and open-grade, may be used without limitation. As one example, an aggregate may be used of which the passing mass percentage for a 2.36 mm sieve is 15-80%, which is a proportion of particles that pass through a sieve mesh with an aperture of 2.36 mm.

The asphalt is also not particularly restricted and, for example, straight asphalt and modified asphalt may be used without any restriction.

The aggregate and the asphalt used in the present invention may contain a recycled aggregate as a substitute for a regular aggregate.

The lubricative solidification material used in the present invention consists of a C6-C30 saturated fatty acid in an amount of 90 to 100 wt% and a C12-C24 unsaturated fatty acid in an amount of 0 to 10 wt%. According to the present invention, the use of the aforementioned lubricative solidification material containing a C6-C30 saturated fatty acid in an amount of 90 to 100 wt% allows the lubricative solidification material to act, before paving, as a cutback material that reduces the viscosity of the asphalt mixture at ambient temperature or temperatures within a moderate temperature range. This allows for paving at ambient temperature or temperatures within a moderate temperature range, and a paved body obtained by solidifying the asphalt mixture can have enhanced strength and can have excellent rut resistance and flexibility. According to the present invention, in terms of further improved strength, rut resistance, and flexibility, the C6-C30 saturated fatty acid constitutes 90 to 100 wt%, preferably 100 wt% of the lubricative solidification material. In other words, in terms of further improved strength, rut resistance, and flexibility, the lubricative solidification material is preferably one substantially consisting of only the C6-C30 saturated fatty acid.

The saturated fatty acid used as a lubricative solidification material in the present invention can be any saturated fatty acid having 6 to 30 carbon atoms. Preferred is a C6-C24 saturated fatty acid, more preferred is a C6-C20 saturated fatty acid, and further more preferred is a C6-C14 saturated fatty acid. That is, the lubricative solidification material preferably contains a C6-C24 saturated fatty acid in an amount within the above range (90 to 100 wt%, preferably 100 wt%), and more preferably contains a C6-C20 saturated fatty acid in an amount within the above range (90 to 100 wt%, preferably 100 wt%), and particularly preferably contains a C6-C14 saturated fatty acid in an amount within the above range (90 to 100 wt%, preferably 100 wt%) .

The saturated fatty acid used as a lubricative solidification material in the present invention preferably contains a C6-C14 saturated fatty acid in an amount of 90 wt% or more (particularly, 95 wt% or more) with respect to the total amount of the saturated fatty acid contained in the lubricative solidification material, and more preferably contains a C8-C12 saturated fatty acid in an amount of 90 wt% or more (particularly, 95 wt% or more).

The saturated fatty acid used as a lubricative solidification material in the present invention may be those including multiple saturated fatty acids having different numbers of carbon atoms. In order to provide a paved body with further improved strength, rut resistance and flexibility, a saturated fatty acid having a single number of carbon atoms constitutes 70 wt% or more, preferably 80 wt% or more, further preferably 90 wt% or more, particularly preferably 95 wt% or more of the saturated fatty acid used as a lubricative solidification material. The expression "a saturated fatty acid having a single number of carbon atoms constitutes 70 wt% or more" means that, for example, caprylic acid, which is a C8 fatty acid, is contained in an amount of 70 wt% or more of the saturated fatty acid used as a lubricative solidification material, or capric acid, which is a C10 fatty acid, is contained in an amount of 70 wt% or more thereof. When isomers are present, the amount of all the isomers is preferably within the above range.

In the present invention, as the lubricative solidification material, a lubricative solidification material containing a C12-C24 unsaturated fatty acid may be used in addition to the C6-C30 saturated fatty acid. The C12-C24 unsaturated fatty acid contained therein allows for paving at lower temperatures. The C12-C24 unsaturated fatty acid constitutes 0 to 10wt% of the lubricative solidification material. When the C12-C24 unsaturated fatty acid is used, the C6-C30 saturated fatty acid constitutes preferably 95 wt%, more preferably 90 wt% of the lubricative solidification material. The use of these components within the above ranges results in a paved body having favorable strength, rut resistance, and flexibility and allows for paving at lower temperatures.

The unsaturated fatty acid used as a lubricative solidification material can be any unsaturated fatty acid having 12 to 24 carbon atoms. Preferred are C14-C20 unsaturated fatty acids, and more preferred are C14-C18 unsaturated fatty acid. That is, the lubricative solidification material preferably contains the C14-C20 unsaturated fatty acid in an amount within the above range, and more preferably contains the C14-C20 unsaturated fatty acid in an amount within the above range. As the unsaturated fatty acid used as a lubricative solidification material, a mixture of multiple unsaturated fatty acids having different numbers of carbon atoms is usually used.

In view of its use in paving at temperatures within a moderate temperature range (e.g. 40 to 120°C), the amount of the lubricative solidification material is 15 to 30 wt% with respect to the total amount of 100 wt% of the asphalt and the lubricative solidification material. The addition of the lubricative solidification material within the above range can result in a paved body having suitably enhanced strength, rut resistance, and flexibility without deteriorating other characteristics. The amount of addition of the lubricative solidification material can be determined to match paving conditions because the service temperature range is extended with an increase in the amount of the added lubricative solidification material.

The acid value of the lubricative solidification material used in the present invention is not particularly limited, but is preferably 170 to 420 mgKOH/g, more preferably 180 to 400 mgKOH/g, further preferably 190 to 390 mgKOH/g.

The alkaline additive material is not particularly limited as long as it is a compound that provides an alkaline component as a result of the action of the hardening accelerator (e.g. water). In order to neutralize the saturated fatty acid, preferred is an alkaline additive material that provides a low hydrogen-ion concentration (i.e. high pH) as a result of the action of the hardening accelerator. Typical compounds used in soapmaking, such as sodium hydroxide and potassium hydroxide, may be used. From the environmental view point, however, an ordinary cement (ordinary Portland cement) which provides a low hydrogen-ion concentration as a result of the action of the hardening accelerator may be preferably used among cements that are used as typical civil engineering materials. The following can be used as the ordinary Portland cement: those which contain, as main components, tricalcium silicate (3CaO·SiO₂) , dicalcium silicate (2CaO·SiO₂) , calcium aluminate (3CaO·Al₂O₃), calcium aluminoferrite (4CaO ·Al₂O₃ ·Fe₂O₃) , calcium sulfate (CaSO₄·2H₂O) , and the like. Other than the above, the followings may be used as the alkaline additive material: an aqueous solution that contains metal ions such as sodium ions (Na⁺), potassium ions (K⁺) , magnesium ions (Mg²⁺), or calcium ions (Ca²⁺); a powder that contains a metal salt that decomposes by addition of water to generate the above ions; sodium hydrogen carbonate (NaHCO₃); and potassium hydrogen carbonate (KHCO₃). The ratio of the amount of the alkaline additive material contained in the asphalt mixture according to the present invention may preferably be within the range of 100:10 to 100:300, more preferably within the range of 100:15 to 100:40 as a weight ratio of "lubricative solidification material:alkaline additive material."

Provided that the action and advantageous effects of the present invention are not impaired, other additives that are usually used in the field of asphalt paving may be added to the asphalt mixture according to the present invention in addition to the above components. Examples of such additives include, but are not particularly limited to, fillers, plant fibers, pigments, and antifreezing agents.

A process for production of the asphalt mixture according to the present embodiment will hereinafter be described.

First, the aggregate is put into a mixing apparatus, and subjected to dry mixing. The dry mixing may be performed under a condition in which the aggregate is heated to 100 to 170°C, preferably 100 to 140°C, more preferably 110 to 130°C. The temperature and the amount of time for the dry mixing are not particularly limited, but the temperature for the dry mixing may be ordinarily 100 to 140°C, preferably 110 to 130°C, while the amount of time for the dry mixing may ordinarily be about 1 second to 1 minute. In the present embodiment, use of the aggregate heated to the above temperature can control the water content in the aggregate, so that the preservation stability of the obtained asphalt mixture can be improved.

The asphalt is then placed into the mixing apparatus and mixed with the aggregate. In the present embodiment, after being heated to 130 to 170°C, preferably to 140 to 160°C, the asphalt is placed into the mixing apparatus, and then mixed with the aggregate. The mixing temperature and mixing time during this operation are not particularly limited as long as these conditions are determined such that an asphalt layer is uniformly formed on the aggregate surface, but the mixing temperature may be ordinarily 100 to 140°C, preferably 110 to 130°C, while the mixing time may ordinarily be about 1 second to 5 minutes.

Subsequently, the lubricative solidification material is placed into the mixing apparatus and mixed with the mixture obtained above. Preferably, the lubricative solidification material may be used at ambient temperature or used after being heated to about 30 to 55°C. The mixing temperature and the mixing time during this operation are also not particularly limited, but the mixing temperature may be ordinarily 100 to 140°C, preferably 110 to 130°C, while the mixing time may ordinarily be about 1 second to 5 minutes.

Thereafter, the alkaline additive material is placed into the mixing apparatus and mixed with the mixture obtained above. The mixing temperature and the mixing time during this operation are not particularly limited, but the mixing temperature may be ordinarily 100 to 140°C, preferably 110 to 130°C, while the mixing time may ordinarily be about 1 second to 5 minutes.

In the present embodiment, the aggregate and the asphalt are mixed first, and the lubricative solidification material and the alkaline additive material are then added and mixed in this order. By such an operation, the obtained asphalt mixture can have a structure in which: an asphalt coating is formed on the surface of the aggregate; a layer comprising the lubricative solidification material is formed on the surface of the asphalt coating; and the alkaline additive material in a solid form covers the surface of the layer comprising the lubricative solidification material. This can enhance the reaction efficiency between the alkaline additive material and the hardening accelerator, and even if a relatively small amount of the alkaline additive material is added, the strength improvement effect can sufficiently be obtained when the hardening accelerator is added. In addition, the addition of a relatively small amount of the alkaline additive material may allow the obtained asphalt mixture to have excellent preservation stability.

The mixture obtained above is then taken out from the mixing apparatus while maintaining its temperature within 100 to 130°C, and the asphalt mixture according to the present embodiment can thus be produced.

### EXAMPLES

The present invention will hereinafter be described with reference to more detailed examples.

### <Example 1>

An asphalt mixture was obtained by compounding an aggregate, a straight asphalt, a lubricative solidification material (trade name "MCFA-8" available from MIYOSHI OIL & FAT CO., LTD.), and an ordinary Portland cement into a twin-shaft pug mill-type mixer (30 to 60 kg/batch) in this order, and mixing them. During this operation, the heating temperature for the aggregate was 110 to 130°C, the heating temperature for the asphalt was 150 to 165°C, and the temperature for the other materials were ambient temperature. The lubricative solidification material (trade name "MCFA-8" available from MIYOSHI OIL & FAT CO., LTD.) used in Example 1 has properties as below:
- proportion of components: 1 wt% of caproic acid (C6 saturated fatty acid), 98 wt% of caprylic acid (C8 saturated fatty acid), and 1 wt% of capric acid (C10 saturated fatty acid)
- acid value: 382 to 390
- iodine value: 1.0 or less.

In Example 1, the asphalt mixture was prepared to contain the lubricative solidification material in an amount of 20 wt% with respect to 100 wt% of the total of the straight asphalt and the lubricative solidification material, and the aggregate used had a particle size shown in Table 1. The composition of the asphalt mixture was as follows:
- aggregate: 100 parts by weight
- straight asphalt: 4.74 parts by weight
- lubricative solidification material: 1.18 parts by weight
- ordinary Portland cement: 1.78 parts by weight

**[Table 1]**

| | | |
|---|---|---|
| Passing mass percentage [%] | 19.0mm | 100.0 |
| | 13.2mm | 97.0 |
| | 4.75mm | 62.8 |
| | 2.36mm | 42.8 |
| | 600 *µ* m | 25.2 |
| | 300 *µ* m | 16.2 |
| | 150 *µ* m | 9.4 |
| | 75 *µ* m | 6.3 |

### <Example 2>

An asphalt mixture was obtained in the same manner as in Example 1 except that a lubricative solidification material (trade name "MCFA-10" available from MIYOSHI OIL & FAT CO., LTD.) was used as a substitute for the lubricative solidification material (trade name "MCFA-8" available from MIYOSHI OIL & FAT CO., LTD). The lubricative solidification material was warmed to 30 to 35°C when used to prepare the asphalt mixture.

The lubricative solidification material (trade name "MCFA-10" available from MIYOSHI OIL & FAT CO., LTD.) used in Example 2 has properties as below:
- proportion of components: 1 wt% of caprylic acid (C8 saturated fatty acid), 98 wt% of capric acid (C10 saturated fatty acid), and 1 wt% of lauric acid (C12 saturated fatty acid);
- acid value: 322 to 328; and
- iodine value: 1.0 or less.

### <Example 3>

An asphalt mixture was obtained in the same manner as in Example 1 except that a lubricative solidification material (trade name "Lauric acid 98" available from MIYOSHI OIL & FAT CO., LTD.) was used as a substitute for the lubricative solidification material (trade name "MCFA-8" available from MIYOSHI OIL & FAT CO., LTD). The lubricative solidification material was warmed to 40 to 45°C when used to prepare the asphalt mixture.

The lubricative solidification material (trade name "Lauric acid 98" available from MIYOSHI OIL & FAT CO., LTD.) used in Example 3 has properties as below:
- proportion of components: 1 wt% of caprylic acid (C10 saturated fatty acid), 98 wt% of lauric acid (C12 saturated fatty acid), and 1 wt% of myristic acid (C14 saturated fatty acid);
- acid value: 277 to 283; and
- iodine value: 1.0 or less.

### <Example 4>

An asphalt mixture was obtained in the same manner as in Example 1 except that a lubricative solidification material (trade name "MXST" available from MIYOSHI OIL & FAT CO., LTD.) was used as a substitute for the lubricative solidification material (trade name "MCFA-8" available from MIYOSHI OIL & FAT CO., LTD). The lubricative solidification material was warmed to 50 to 55°C when used to prepare the asphalt mixture.

The lubricative solidification material (trade name "MXST" available from MIYOSHI OIL & FAT CO., LTD.) used in Example 4 has properties as below:
- proportion of components: saturated fatty acid mixture mainly consisting of stearic acid (C18 saturated fatty acid);
- acid value: 190 to 210; and
- iodine value: 10.0 or less.

### <Example 5>

An asphalt mixture was obtained in the same manner as in Example 1 except that caproic acid (C6 saturated fatty acid) was used as a substitute for the lubricative solidification material (trade name "MCFA-8" available from MIYOSHI OIL & FAT CO., LTD). The lubricative solidification material was warmed to 50 to 55°C when used to prepare the asphalt mixture.

### <Example 6>

An asphalt mixture was obtained in the same manner as in Example 1 except that behenic acid (C22 saturated fatty acid) was used as a substitute for the lubricative solidification material (trade name "MCFA-8" available from MIYOSHI OIL & FAT CO., LTD). The lubricative solidification material was warmed to 50 to 55°C when used to prepare the asphalt mixture.

### <Comparative Example 1>

An asphalt mixture was obtained in the same manner as in Example 1 except that a lubricative solidification material (tall oil fatty acid, trade name "HARTALL FA-1" available from Harima Chemicals Group, Inc.) was used as a substitute for the lubricative solidification material (trade name "MCFA-8" available from MIYOSHI OIL & FAT CO., LTD).

The tall oil fatty acid (trade name "HARTALL FA-1" available from Harima Chemicals Group, Inc.) used in Comparative Example 1 has properties as below:
- "fatty acid:resin acid" = 98.5:1.5 (weight ratio);
- unsaponifiable matter content: 2.0 wt%;
- proportion of components of fatty acids: 1-3 wt% of palmitic acid, 1-3 wt% of stearic acid, 40-50 wt% of oleic acid, and 35-45 wt% of linoleic acid;
- type of resin acid: rosin; and
- acid value: 194 mgKOH/g.

### <Example 7> (Comparative Example 2)

An asphalt mixture was obtained in the same manner as in Example 1 except that two lubricative solidification materials (0.59 parts by weight of "MCFA-8" available from MIYOSHI OIL & FAT CO., LTD and 0.59 parts by weight of "Lauric acid 98" available from MIYOSHI OIL & FAT CO., LTD (weight ratio 1:1)) were used in combination. The lubricative solidification materials were warmed to 50 to 55°C when used to prepare the asphalt mixture.

### <Example 8> (Comparative Example 3)

An asphalt mixture was obtained in the same manner as in Example 1 except that two lubricative solidification materials (0.59 parts by weight of "Lauric acid 98" available from MIYOSHI OIL & FAT CO., LTD and 0.59 parts by weight of "PM200" available from MIYOSHI OIL & FAT CO., LTD (weight ratio 1:1)) were used in combination. The lubricative solidification materials were warmed to 50 to 55°C when used to prepare the asphalt mixture.

The lubricative solidification material (trade name "PM200" available from MIYOSHI OIL & FAT CO., LTD.) used in Example 8 has properties as below:
- proportion of components: 11 wt% of palmitic acid (C16 saturated fatty acid), 4 wt% of stearic acid (C18 saturated fatty acid), 1 wt% of palmitoleic acid (C16 unsaturated fatty acid), 41 wt% of oleic acid (C18 unsaturated fatty acid), 37 wt% of linoleic acid (C18 unsaturated fatty acid), and 6 wt% of linolenic acid (C18 unsaturated fatty acid);
- acid value: 195 to 203; and
- iodine value: 112 to 122.

### <Example 9> (Reference Example)

An asphalt mixture was obtained in the same manner as in Example 1 except that three lubricative solidification materials (0.393 parts by weight of "MCFA-8" available from MIYOSHI OIL & FAT CO., LTD, 0.393 parts by weight of "Lauric acid 98" available from MIYOSHI OIL & FAT CO., LTD, and 0.393 parts by weight of "MXST" available from MIYOSHI OIL & FAT CO., LTD (weight ratio 1:1:1)) were used in combination. The lubricative solidification materials were warmed to 50 to 55°C when used to prepare the asphalt mixture.

### <Evaluation of Asphalt Mixtures of Examples 1 to 9 and Comparative Example 1>

The asphalt mixtures of Examples 1 to 9 and Comparative Example 1 obtained as described above each were put into a mold (formwork) heated to a compaction temperature. Then, water was added, and compaction was performed (50 times each for both surfaces). After being cured for 7 days under the condition of a temperature of 20°C and a humidity of 60%, test pieces were obtained. The test pieces thus obtained were used in the following Marshall test, wheel tracking test, and bending test.

### (Marshall Test)

Marshall stability was measured using the obtained test pieces. The measurement of Marshall stability was performed at 60°C. Greater values of Marshall stability (kN) are preferred because they indicate that the obtained test pieces have stability and high strength at an earlier stage.

### (Wheel Tracking Test)

For the test pieces obtained as described above, the wheel tracking test was performed at a testing temperature of 60°C in accordance with "3-7-1" and "3-7-3" of the "Paving Testing Method Handbook" ("Hosou Shikenhou Binran" in Japanese) (published by Japan Road Association, November 1988) to determine dynamic stability (times/mm). Greater values of dynamic stability (times/mm) are preferred because they indicate higher strength, a lower frequency of rut formation, and excellent rut resistance.

### (Bending Test)

For the test pieces obtained as described above, the bending test was performed at a testing temperature of -10°C in accordance with the "Paving Investigation/Testing Method Handbook B005" ("Hosou Chosa/Shikenhou Binran" in Japanese) to determine breaking strain (× 10⁻³ mm/mm). According to the bending test, greater breaking strain is preferred because it indicates excellent flexibility and a lower frequency of cracks.

The results of the Marshall test, the wheel tracking test, and the bending test are shown in Tables 2 and 3.

**[Table 2]**

| | Lubricative solidification material | Marshall test | Wheel tracking test | Bending test |
|---|---|---|---|---|
| | | Stability (kN) | Dynamic stability (times/mm) | Breaking strain × 10⁻³ |
| Example 1 | MCFA-8 | 11.8 | 12,000 | 3.6 |
| | (1 wt% of caproic acid, 98 wt% of caprylic acid, 1 wt% of capric acid) | | | |
| Example 2 | MCFA-10 | 11.5 | 11,000 | 3.5 |
| | (1 wt% of caprylic acid, 98 wt% of capric acid, 1 wt% of lauric acid) | | | |
| Example 3 | Lauric acid 98 | 12.5 | 14,000 | 4.0 |
| | (1 wt% of capric acid, 98 wt% of lauric acid, 1 wt% of myristic acid) | | | |
| Example 4 | MXST | 12.4 | 15,000 | 3.7 |
| | (saturated fatty acid mixture mainly consisting of stearic acid) | | | |
| Example 5 | Caproic acid | 11.2 | 3,300 | 3.6 |
| | (100 wt% of caproic acid) | | | |
| Example 6 | Behenic acid | 12.5 | 9,800 | 2.8 |
| | (100 wt% of behenic acid) | | | |
| Comparative Example 1 | HARTALL FA-1 | 10.2 | 1,900 | 2.3 |
| | (tall oil fatty acid) | | | |

**[Table 3]**

| | Lubricative solidification material | Marshall test | Wheel tracking test | Bending test |
|---|---|---|---|---|
| | | Stability (kN) | Dynamic stability (times/ mm) | Breaking strain ×10⁻³ |
| Example 7 (Comparative Example 2) | MCFA-8 : Lauric acid 98 = 1 : 1 (weight ratio) | 11,0 | 11.000 | 3,5 |
| Example 8 (Comparative Example 3) | PM200 : Lauric acid 98 = 1 : 1 (weight ratio) | 10,8 | 7.400 | 3,9 |
| Example 9 (Reference Example) | MCFA-8 : Lauric acid 98 : MXST = 1 : 1 : 1 (weight ratio) | 11,4 | 14.000 | 3,4 |

Tables 2 and 3 show that compared to those obtained using the tall oil fatty acid, which mainly consists of unsaturated fatty acids, the use of the lubricative solidification materials containing a C6-C30 saturated fatty acid in an amount of 50 to 100 wt% provides test pieces having better stability (shown by the Marshall test), dynamic stability (shown by the wheel tracking test), and breaking strain (shown by the bending test), and results in excellent strength, rut resistance, and flaxibility.

## Claims

1. An asphalt mixture comprising an aggregate, an asphalt, a lubricative solidification material, and an alkaline additive material mixed together,
wherein the lubricative solidification material is consisting of a C6-C30 saturated fatty acid and a C12-C24 unsaturated fatty acid,
the C6-C30 saturated fatty acid constitutes 90 to 100 wt% thereof,
the C12-C24 unsaturated fatty acid constitutes 0 to 10 wt% thereof, and
the amount of the lubricative solidification material is 15 to 30 wt% with respect to the total amount of 100 wt% of the asphalt and the lubricative solidification material, wherein a saturated fatty acid having a single number of carbon atoms constitutes 70 wt% or more of the saturated fatty acid contained in the lubricative solidification material.

2. The asphalt mixture according to claim 1, wherein a ratio of the lubricative solidification material to the alkaline additive material is within a range of 100:10 to 100:300 as a weight ratio of "lubricative solidification material:alkaline additive material."

3. A paving method comprising: applying the asphalt mixture according to claim 1 or 2 in paving,
adding a hardening accelerator to the asphalt mixture which is applied to cause a saponification reaction or a neutralization reaction of the lubricative solidification material with the alkaline additive material, thereby providing enhanced strength.

4. A process for production of the asphalt mixture according to any one of claims 1 to 3, the process comprising:
a first step of mixing an aggregate heated to 100 to 170°C and an asphalt heated to 130 to 170°C using a mixing apparatus;
a second step of adding and mixing the lubricative solidification material to and with the mixture obtained in the first step; and
a third step of adding and mixing the alkaline additive material to and with the mixture obtained in the second step.

## Patentansprüche

1. Asphaltmischung, umfassend einen Zuschlagstoff, einen Asphalt, ein schmierendes Verfestigungsmaterial und ein alkalisches Additivmaterial, die miteinander vermischt sind,
wobei das schmierende Verfestigungsmaterial aus einer gesättigten C6-C30-Fettsäure und einer ungesättigten C12-C24-Fettsäure besteht,
wobei die gesättigte C6-C30-Fettsäure 90 bis 100 Gew.-% davon ausmacht,
die ungesättigte C12-C24-Fettsäure 0 bis 10 Gew.-% davon ausmacht und
die Menge des schmierenden Verfestigungsmaterials 15 bis 30 Gew.-% der Gesamtmenge von 100 Gew.-% des Asphalts und des schmierenden Verfestigungsmaterials ausmacht, wobei eine gesättigte Fettsäure mit einer einzigen Anzahl von Kohlenstoffatomen 70 Gew.-% oder mehr der in dem schmierenden Verfestigungsmaterial enthaltenen gesättigten Fettsäure ausmacht.

2. Asphaltmischung nach Anspruch 1, wobei das Verhältnis des schmierenden Verfestigungsmaterials zum alkalischen Additivmaterial in einem Bereich von 100:10 bis 100:300 als Gewichtsverhältnis von "schmierendem Verfestigungsmaterial: alkalischem Additivmaterial" liegt.

3. Verfahren zum Aufbringen von Straßenbelägen, umfassend:
Aufbringen der Asphaltmischung gemäß Anspruch 1 oder 2 beim Aufbringen von Straßenbelägen,
Hinzufügen eines Härtungsbeschleunigers zu der aufgetragenen Asphaltmischung, um eine Verseifungsreaktion oder eine Neutralisationsreaktion des schmierenden Verfestigungsmaterials mit dem alkalischen Zusatzstoff zu bewirken, wodurch eine verbesserte Festigkeit erzielt wird.

4. Verfahren zur Herstellung der Asphaltmischung gemäß einem der Ansprüche 1 bis 3, wobei das Verfahren umfasst:
einen ersten Schritt des Mischens eines auf 100 bis 170°C erhitzten Zuschlagstoffs und eines auf 130 bis 170°C erhitzten Asphalts unter Verwendung einer Mischvorrichtung;
einen zweiten Schritt des Hinzufügens und Mischens des schmierenden Verfestigungsmaterials zu und mit der in dem ersten Schritt erhaltenen Mischung; und
einen dritten Schritt des Hinzufügens und Vermischens des alkalischen Zusatzstoffes zu und mit der im zweiten Schritt erhaltenen Mischung.

## Revendications

1. Mélange d'asphalte comprenant un agrégat, un asphalte, un matériau de solidification lubrifiant et un additif alcalin mélangés ensemble,
dans lequel le matériau de solidification lubrifiant est constitué d'un acide gras saturé en C6-C30 et d'un acide gras insaturé en C12-C24,
l'acide gras saturé en C6-C30 constituant 90 à 100% en poids de celui-ci,
l'acide gras insaturé en C12-C24 constituant 0 à 10% en poids de celui-ci, et
la quantité de matériau de solidification lubrifiant représente 15 à 30% en poids par rapport à la quantité totale de 100% en poids de l'asphalte et du matériau de solidification lubrifiant, dans lequel un acide gras saturé ayant un nombre unique d'atomes de carbone constitue 70% en poids ou plus de l'acide gras saturé contenu dans le matériau de solidification lubrifiant.

2. Mélange d'asphalte selon la revendication 1, dans lequel le rapport entre le matériau de solidification lubrifiant et l'additif alcalin est compris dans une plage de 100:10 à 100:300 en rapport pondéral « matériau de solidification lubrifiant : additif alcalin ».

3. Procédé de pavage comprenant : l'application du mélange d'asphalte selon la revendication 1 ou 2 dans le pavage,
l'ajout d'un accélérateur de durcissement au mélange d'asphalte appliqué afin de provoquer une réaction de saponification ou une réaction de neutralisation du matériau de solidification lubrifiant avec le matériau additif alcalin, ce qui permet d'obtenir une résistance accrue.

4. Procédé de production du mélange d'asphalte selon l'une des revendications 1 à 3, le procédé comprenant :
une première étape consistant à mélanger un agrégat chauffé à une température comprise entre 100 et 170°C et un asphalte chauffé à une température comprise entre 130 et 170°C à l'aide d'un appareil de mélange ;
une deuxième étape consistant à ajouter et à mélanger le matériau de solidification lubrifiant au mélange obtenu à l'étape précédente ; et
une troisième étape consistant à ajouter et à mélanger l'additif alcalin au mélange obtenu lors de la deuxième étape.
